# EUROPEAN PATENT APPLICATION

(11) **EP 4 618 506 A1**
(43) Date of publication of application: **17.09.2025**
(21) Application number: 23889199.8
(22) Date of filing: 10.11.2023
(51) Int. Cl.: H04L 47/2466, H04W 28/12, H04W 72/543, H04W 84/12

(54) **METHOD AND DEVICE FOR TRANSMITTING/RECEIVING LATENCY SENSITIVE TRAFFIC IN WIRELESS LAN SYSTEM**

(30) Priority: 11.11.2022 KR 20220150754; 04.10.2023 KR 20230131793
(71) Applicant: LG Electronics Inc., Yeongdeungpo-gu Seoul 07336 (KR)
(72) Inventor: BAEK, Sunhee, Seoul 06772 (KR); JANG, Insun, Seoul 06772 (KR); CHOI, Jinsoo, Seoul 06772 (KR)
(74) Representative: Mooser, Sebastian Thomas
(86) International application number: PCT/KR2023/018051
(87) International publication number: WO 2024/101943

(57) **Abstract**

A method and a device for transmitting/receiving latency sensitive traffic in a wireless LAN system are disclosed. The method performed by means of a first STA in the wireless LAN system, according to one embodiment of the present disclosure, may comprise the steps of: transmitting, to a second STA, information about data included in a specific queue for low-latency; receiving, from the second STA, information about a time section for data transmission/reception, and transmitting, to the second STA, a PPDU including the data in the time section. Here, the data can be transmitted in traffic designated as one from among candidate traffic identifier (candidate TID) values pre-defined for low-latency.

## Description

### [TECHNICAL FIELD]

The present disclosure relates to a method and device for transmitting and receiving latency sensitive traffic in a Wireless Local Area Network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [DISCLOSURE]

### [TECHNICAL PROBLEM]

The technical object of the present disclosure is to provide a method and device for transmitting and receiving latency sensitive traffic in a wireless local area network (WLAN) system.

The technical object of the present disclosure is to provide a method and device for configuring a queue for latency sensitive traffic and configuring a time interval for transmitting and receiving traffic included in the queue in a wireless local area network (WLAN) system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless LAN system according to an aspect of the present disclosure may comprise: transmitting information for data included in a specific queue for low latency to a second STA; receiving information for a time interval for transmission and reception of the data from the second STA; and transmitting a physical layer protocol data unit (PPDU) including the data to the second STA in the time interval. Herein, the data may be transmitted in traffic assigned as one of candidate traffic identifier (candidate TID) values predefined for low latency.

A method performed by a second station (STA) in a wireless LAN system according to an additional aspect of the present disclosure may comprise: receiving information for data included in a specific queue for low latency from a first STA; transmitting information for a time interval for transmission and reception of the data to the first STA; and receiving a physical layer protocol data unit (PPDU) including the data from the first STA in the time interval. Herein, the data may be transmitted in traffic assigned as one of candidate traffic identifier (candidate TID) values predefined for low latency.

### [Technical Effects]

According to the present disclosure, a method and device for transmitting and receiving latency sensitive traffic in a wireless local area network (WLAN) system may be provided.

According to the present disclosure, a method and device for configuring a queue for latency sensitive traffic in a wireless LAN system and configuring a time interval for transmitting and receiving traffic included in the queue may be provided.

According to the present disclosure, a method and device for preferentially transmitting and receiving latency sensitive traffic differently from traffic stored in an existing queue may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for explaining an example of an individual TWT operation to which the present disclosure may be applied.
FIG. 9 is a diagram for explaining an example of a broadcast TWT operation to which the present disclosure may be applied.
FIG. 10 is a diagram for explaining an example of a TWT information element format.
FIG. 11 is a diagram for explaining examples of an individual TWT parameter set field format.
FIG. 12 is a diagram for explaining examples of a broadcast TWT parameter set field format.
FIG. 13 is a diagram for explaining examples of a field format related to a limited TWT operation.
FIG. 14 illustrates a Queue LL and a conventional Queue-based structure according to an embodiment of the present disclosure.
FIG. 15 illustrates an example of mapping between delay-sensitive traffic and AC according to an embodiment of the present disclosure.
FIG. 16 illustrates another example of mapping between delay-sensitive traffic and AC according to an embodiment of the present disclosure.
FIG. 17 illustrates a sub-SP for transmitting and receiving data stored in a Queue LL according to an embodiment of the present disclosure.
FIG. 18 illustrates an operation flow diagram by a first STA according to an embodiment of the present disclosure.
FIG. 19 illustrates an operation flow diagram by a second STA according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

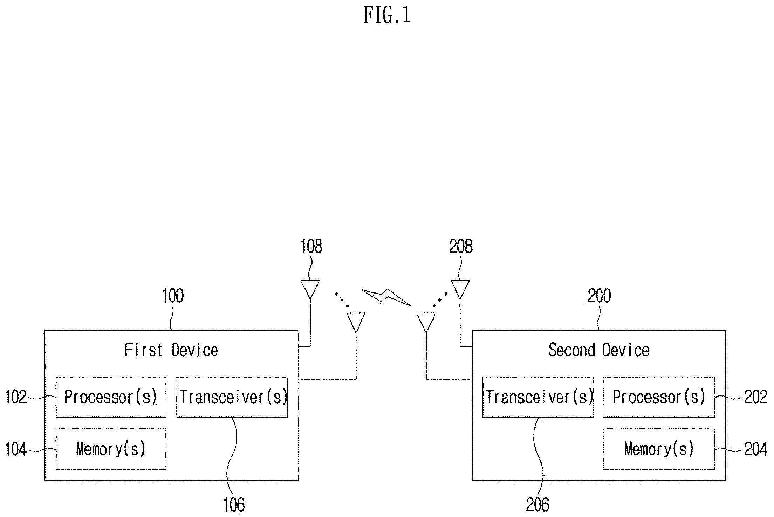

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

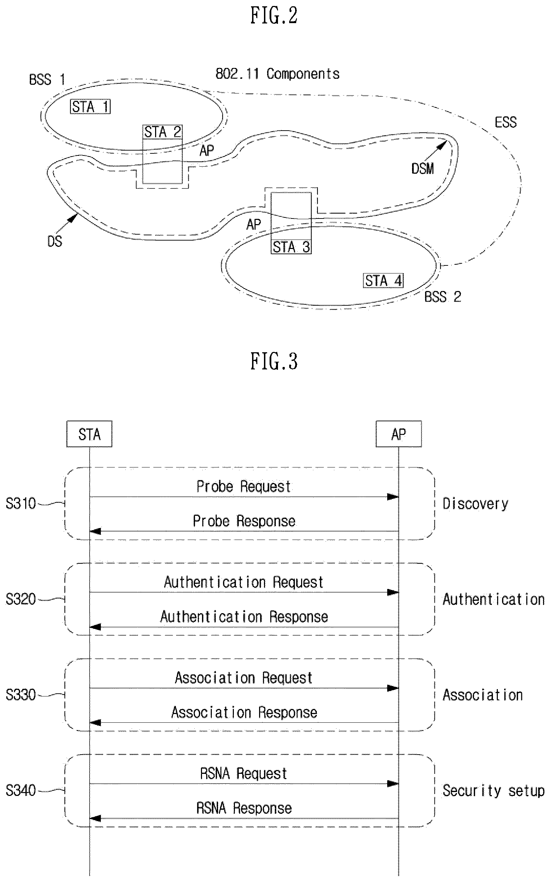

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

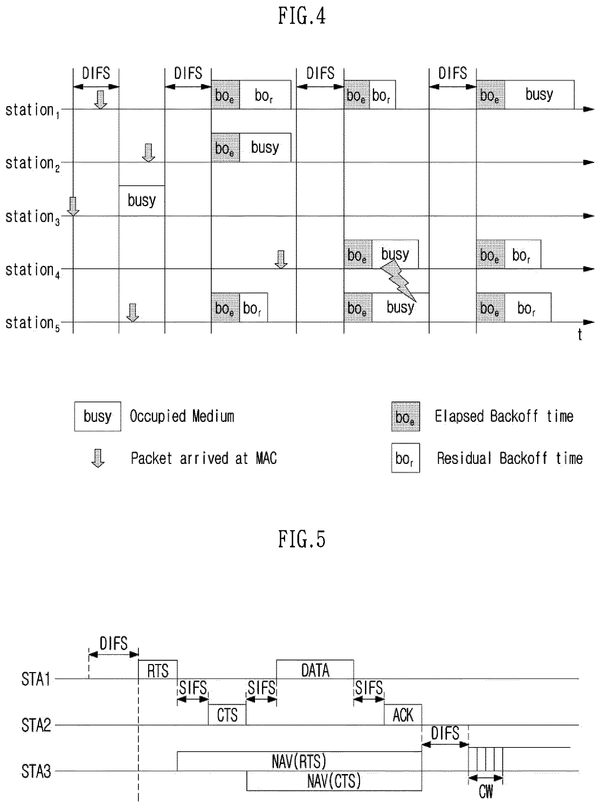

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n **=** 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

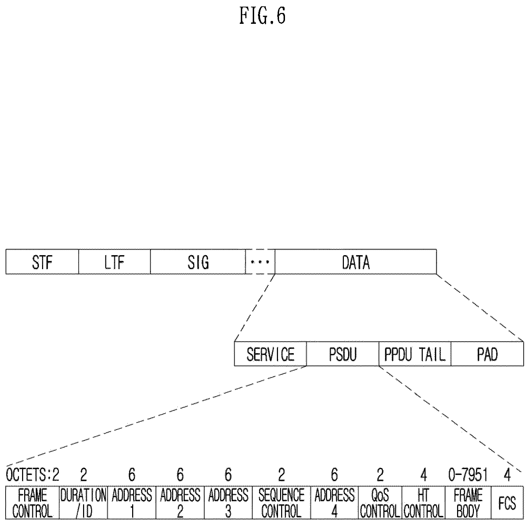

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

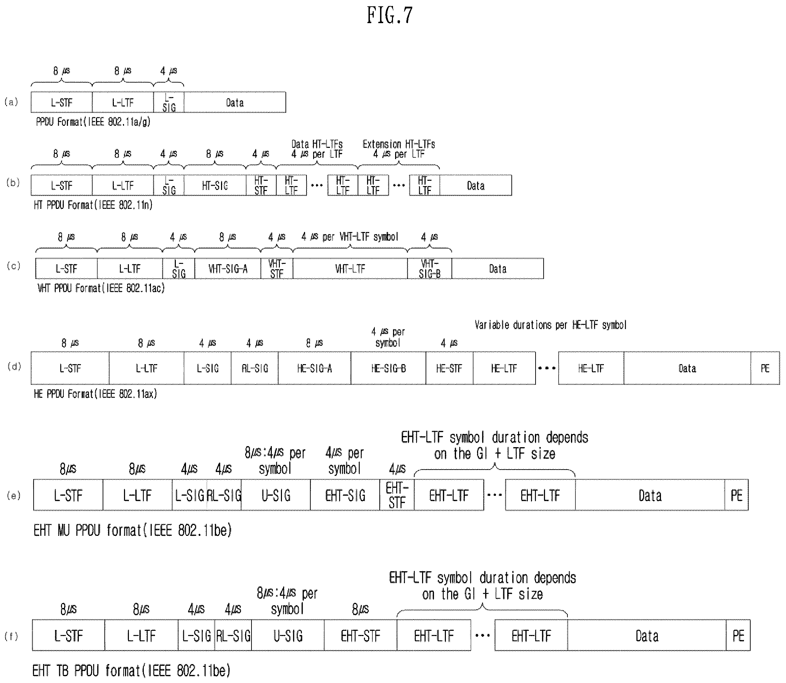

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Target wake time (TWT)

A TWT is a power saving (PS) technology which may improve energy efficiency of non-AP STAs by defining a service period (SP) between an AP and non-AP STA and sharing information about a SP each other to reduce media contention.

A STA which performs a request/a suggest/a demand, etc. in a TWT setup step may be referred to as a TWT requesting STA. In addition, an AP which responds to a corresponding request such as Accept/Reject, etc. may be referred to as a TWT responding STA.

A setup step may include a TWT request for an AP of a STA, a type of a TWT operation performed and a process of determining/defining a frame type transmitted or received. A TWT operation may be divided into an individual TWT and a broadcast TWT.

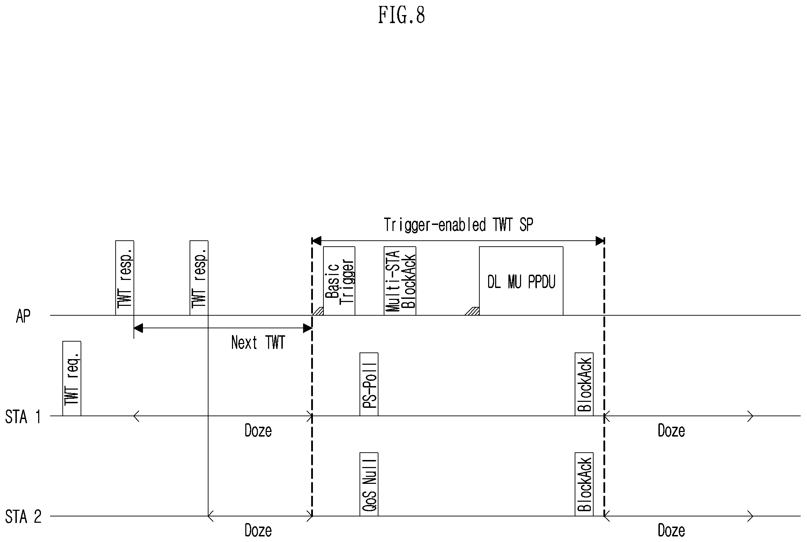

FIG. 8 is a diagram for describing an example of an individual TWT operation to which the present disclosure may be applied.

An individual TWT is a mechanism that an AP and non-AP STA perform data exchange after performing negotiation for an awake/doze status of a non-AP STA through transmission or reception of a TWT request/response frame.

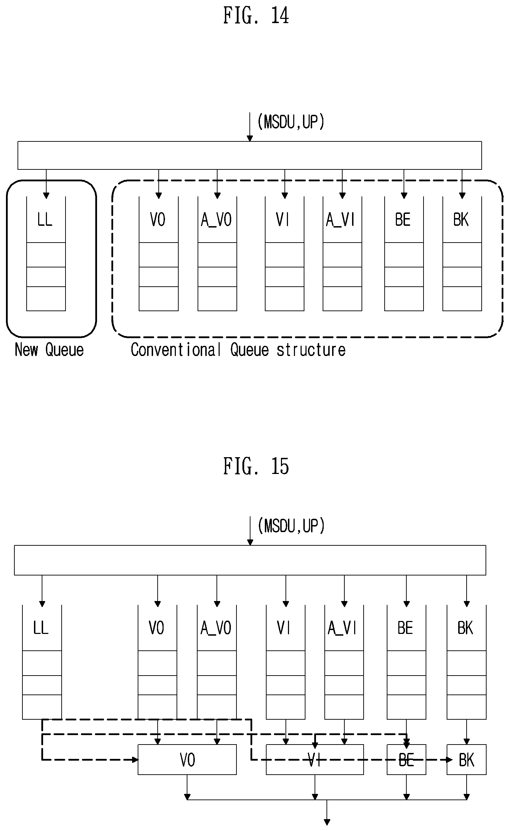

In an example of FIG. 14, an AP and STA1 may form a trigger-enabled TWT agreement through a TWT request frame and a TWT response frame.

Here, a method used by STA1 is a solicited TWT method, which is a method that when STA 1 transmits a TWT request frame to an AP, STA 1 receives information for a TWT operation from an AP through a TWT response frame.

On the other hand, STA 2 which performs an unsolicited TWT method may receive information on a trigger-enabled TWT agreement configuration from an AP through an unsolicited TWT response.

Specifically, STA 2 may calculate a next TWT by adding a specific number from a current TWT value. During a trigger-enabled TWT SP, an AP may transmit a trigger frame to STAs. The trigger frame may inform STAs that an AP has buffered data. In response to it, STA 1 may inform an AP of its awake status by transmitting a PS-Poll frame. In addition, STA 2 may inform an AP of its awake status by transmitting a QoS Null frame. Here, a data frame transmitted by STA 1 and STA 2 may be a frame in a TB PPDU form. An AP which confirmed a status of STA 1 and STA 2 may transmit a DL MU PPDU to awake STAs. When a corresponding TWT SP expires, STA 1 and STA 2 may switch to a doze status.

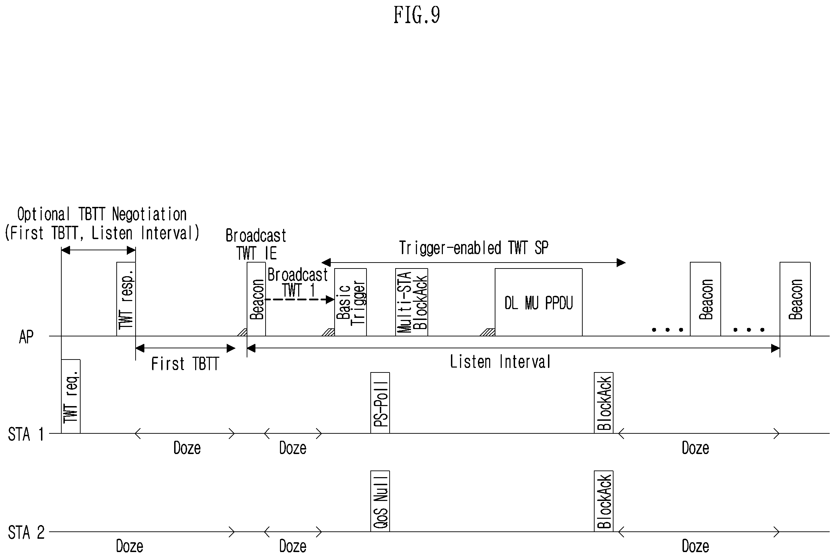

FIG. 9 is a diagram for describing an example of a broadcast TWT operation to which the present disclosure may be applied.

A broadcast TWT is a TWT that a non-AP STA (or a TWT scheduling STA) acquires information on a target beacon transmission time (TBTT) and a listen interval, etc. by transmitting or receiving a TWT request/response frame with an AP (or a TWT scheduled STA). Here, a negotiation operation for a TBTT may be performed. Based on it, an AP may define a frame which will include scheduling information of a TWT through a beacon frame.

In FIG. 9, STA 1 performs a solicited TWT operation and STA 2 performs an unsolicited TWT operation. An AP may transmit a DL MU PPDU after confirming an awake status of STAs through a trigger transmitted by an AP. It may be the same as a process of an individual TWT. In a broadcast TWT, a trigger-enabled TWT SP including a beacon frame may be repeated several times at a certain interval.

The transmission of TWT information may be accomplished through a TWT information frame and a TWT information element. The TWT information frame is transmitted by an STA to request or transmit information on a TWT agreement, and is transmitted by one of the STAs of an existing TWT agreement. The action field of the TWT Information frame includes a TWT information field.

A TWT Information field may include a 3-bit TWT flow identifier subfield, a 1-bit response requested subfield, a 1-bit next TWT request subfield, a 2-bit next TWT subfield size subfield, a 1-bit all TWT subfield and a 0/32/48/64-bit next TWT subfield.

Here, the TWT flow identifier subfield may be used to identify the flow for which TWT information is requested/provided.

The Response Request subfield may indicate whether the transmitter of a frame including a TWT Information field requests transmission of a TWT Information frame (to be transmitted in response to reception of the frame). To request the receiver not to transmit a TWT Information frame in response to reception of the frame, the Response Request subfield value may be set to 0. To request the receiver to transmit a TWT Information frame in response to reception of the frame, the Response Request subfield value may be set to 1.

To indicate a request for transmission of a TWT information frame containing the following TWT field (where the length of the TWT information frame is not 0), the value of the next TWT subfield may be set to 1. Otherwise, the value of the next TWT subfield may be set to 0.

The Next TWT Subfield Size subfield may indicate the size of the next TWT subfield. When the size of the next TWT subfield is 0/32/48/64 bits, the value of the Next TWT Subfield Size subfield may be set to 0/1/2/3.

All TWT subfield values may be set to 1 by the HE STA, which may mean that the TWT information frame has realigned all TWTs. Otherwise, all TWT subfield values may be set to 0.

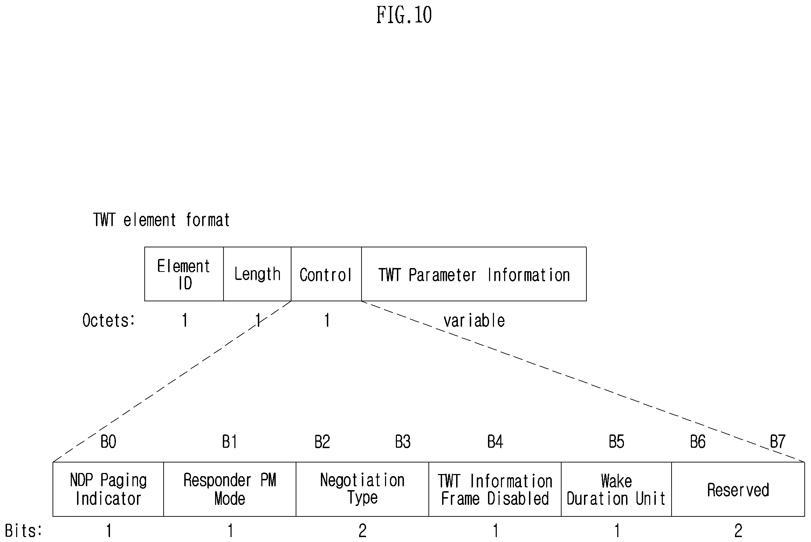

FIG. 10 is a drawing for explaining an example of a TWT information element format.

The TWT element may be transmitted and received in a beacon, probe response, (re)association response frame, etc. The TWT element may include an element identifier (element ID) field, a length field, a control field, and a TWT parameter information field.

The control fields of a TWT element have the same format, regardless of whether it is an individual TWT or a broadcast TWT.

A NDP paging indication subfield may have a value of 1 when a NDP paging field exists and may have a value of 0 when a NDP paging field does not exist.

A responder PM mode subfield may represent a power management (PM) mode.

A negotiation type subfield may represent whether information included in a TWT element is about a negotiation of broadcast TWT or individual TWT(s) or is about a wake TBTT interval.

For example, when a value of a negotiation type subfield is 0, a TWT subfield is about a future individual TWT SP start time and a TWT element includes one individual TWT parameter set. It may correspond to an individual TWT negotiation between a TWT requesting STA and a TWT responding STA or may correspond to an individual TWT announcement by a TWT responder.

For example, when a value of a negotiation type subfield is 1, a TWT subfield is about a next TBTT time and a TWT element includes one individual TWT parameter set. It may correspond to a wake TBTT and a wake interval negotiation between a TWT scheduled STA and a TWT scheduling AP.

For example, when a value of a negotiation type subfield is 2, a TWT subfield is about a future broadcast TWT SP start time and a TWT element includes at least one broadcast TWT parameter set. It may correspond to providing a broadcast TWT schedule to a TWT scheduled STA by including a TWT element in a broadcast management frame transmitted by a TWT scheduling AP.

For example, when a value of a negotiation type subfield is 3, a TWT subfield is about a future broadcast TWT SP start time and a TWT element includes at least one broadcast TWT parameter set. It may correspond to managing membership of a broadcast TWT schedule by including a TWT element in an individually addressed management frame transmitted by any one of a TWT scheduled STA or a TWT scheduling AP.

When a TWT information frame disabled subfield is configured as 1, it represents that reception of a TWT information frame by a STA is disabled and otherwise, it may be configured as 0.

A wake duration unit subfield represents a unit of a nominal minimum TWT wake duration field. A wake duration unit subfield may be configured as 0 when a unit is 256us and may be configured as 1 when a unit is a TU. When it is not a HE/EHT STA, a wake duration unit subfield may be configured as 0.

A most significant bit (MSB) of a negotiation type field may correspond to a broadcast field. When the broadcast field is 1, at least one broadcast TWT parameter set may be included in a TWT element. When the broadcast field is 0, only one individual TWT parameter set may be included in a TWT element. A TWT element that the broadcast field is configured as 1 may be referred to as a broadcast TWT element.

In addition, although FIG. 10 illustrates a case where the reserved field consists of 2 bits, this is only one embodiment. For example, a TWT element may include a Link ID bitmap present field (e.g., 1 bit) and include a reserved field (e.g., 1 bit).

For example, when the Link ID Bitmap Existence field is set to 1, the Link ID Bitmap subfield may be set to exist in the individual TWT parameter set field format described later, and when the Link ID Bitmap Existence field is set to 0, the Link ID Bitmap subfield may be set not to exist in the individual TWT parameter set field format.

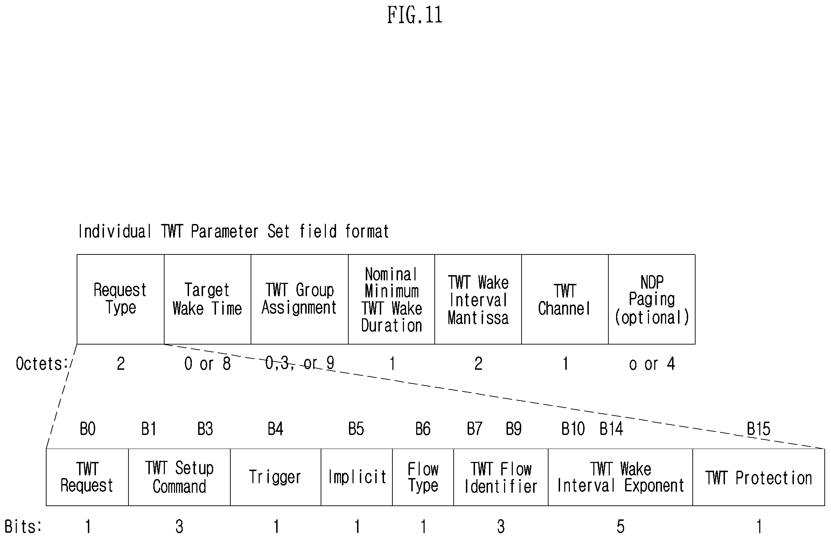

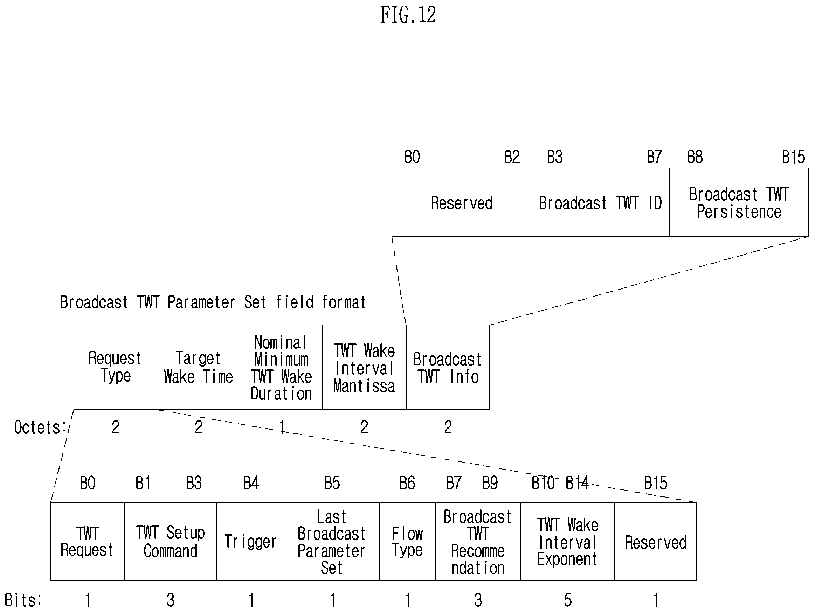

FIG. 11 is a diagram for describing examples of an individual TWT parameter set field format. FIG. 12 is a diagram for describing examples of a broadcast TWT parameter set field format.

A TWT parameter information field included in a TWT element in FIG. 10 may have a different configuration according to an individual TWT or a broadcast TWT.

For an individual TWT, a TWT parameter information field in a TWT element includes a single individual TWT parameter set field.

For a broadcast TWT, a TWT parameter information field in a TWT element includes at least one broadcast TWT parameter set field. Each broadcast TWT parameter set may include specific information on one broadcast TWT.

As shown in FIGS. 11 and 12, an individual TWT parameter set field and a broadcast TWT parameter set field include common subfields.

A request type subfield has the same size in an individual TWT parameter set field and a broadcast TWT parameter set field, but may have a different detailed configuration. It is described later.

A target wake time subfield represents a start time of an individual/broadcast TWT SP expected in the future.

A nominal minimum TWT wake duration subfield represents the minimum unit that a TWT requesting STA is expected to be awaken in order to complete frame exchange related to a TWT flow identifier during a TWT wake interval duration. Here, a TWT wake interval may mean an average time between contiguous TWT SPs expected by a TWT requesting STA.

A TWT Wake Interval Mantissa subfield is a binary value of a TWT wake interval value, which may be indicated in microseconds.

In reference to FIG. 11, a TWT group assignment subfield, a TWT channel and a NDP paging subfield are included only in an individual TWT parameter set field.

A TWT group assignment subfield is provided to a TWT requesting STA by including information on a TWT group to which a STA is assigned. A TWT value in a TWT group may be calculated by using corresponding information. A TWT value of a STA may be the same as a value obtained by multiplying a value of a zero offset and a value of a TWT offset by a value of a TWT unit.

Here, the TWT group information may include a TWT group ID subfield, a zero offset presence subfield, a group zero offset subfield, a TWT unit subfield, and a TWT offset subfield.

The TWT Group ID subfield indicates an identifier of a TWT group to which a requesting STA is assigned, and a TWT group may mean a group of STAs having a TWT value within a specific interval of TSF values. When the TWT Group ID subfield value is set to 0, this may indicate a unique TWT group including all STAs of the BSS.

The zero offset presence subfield may indicate whether a zero offset subfield of the group exists. For example, if the zero offset presence subfield value is set to 1, this may indicate that a zero offset subfield of the group exists. If the zero offset presence subfield value is set to 0, this may indicate that a zero offset subfield of the group does not exist.

The zero offset subfield of the group is optional and may indicate an initial TWT value of a TWT group identified by the TWT group ID.

The TWT Unit subfield may indicate an increment unit of a TWT value within a TWT group identified by a TWT group ID. For example, if the TWT Unit time values are 32µs, 256µs, 1024µs, 8.192ms, 32.768ms, and 262.144ms, respectively, the TWT Unit subfield values may be expressed as 0, 1, 2, 3, and 4, respectively.

The TWT offset subfield may indicate the position within a assigned group of an STA corresponding to an RA of a frame containing a TWT element.

A TWT channel subfield represents a bitmap representing an allowed channel. When transmitted by a TWT requesting STA, a TWT channel subfield may include a bitmap representing a channel which is requested by a STA to be used as a temporary basic channel during a TWT SP. When transmitted by a TWT response STA, a TWT channel subfield may include a bitmap representing a channel that a TWT request is allowed.

A NDP paging subfield is optional and may include an identifier of a paged STA, information related to the maximum number of TWT wake intervals between NDP paging frames, etc.

In reference to FIG. 12, a broadcast TWT information (broadcast TWT info) subfield is included only in a broadcast TWT parameter set field. A broadcast TWT information subfield may include a 3-bit reserved bit, a 5-bit broadcast TWT identifier (ID) subfield and a 8-bit broadcast TWT persistence subfield. A broadcast TWT identifier subfield represents a broadcast ID of a specific broadcast TWT that a STA requests participation or provides a TWT parameter according to a value of a TWT setup command subfield of a TWT element. A broadcast TWT persistence subfield represents the number of TBTTs planned on a schedule of a broadcast TWT.

Next, a detailed configuration of a request type subfield is described.

First, a format of a request type subfield of an individual TWT parameter set field is described by referring to FIG. 11.

A TWT request subfield may represent whether it is a requesting STA or a response STA. When that value is 1, it may represent that it is a TWT requesting STA or a scheduling STA and when that value is 0, it may represent that it is a TWT responding STA or a scheduling AP.

A TWT setup command subfield may represent a command such as Request, Suggest, Demand, Accept, Alternate, Dictate, Reject, etc.

A trigger subfield represents whether a trigger frame will be used in a TWT SP. When that value is 1, a trigger may be used and when that value is 0, a trigger may not be used.

An implicit subfield may represent whether it is an implicit TWT or an explicit TWT. When that value is 1, it may represent an implicit TWT and when that value is 0, it may represent an explicit TWT.

A flow type subfield may represent an interaction type between a TWT requesting STA (or a TWT scheduled STA) and a TWT responding STA (or a TWT scheduling AP). When that value is 1, it may mean an announced TWT that a STA transmits a wakeup signal to an AP by transmitting a PS-Poll or automatic power save delivery (APSD) trigger frame before a frame, not a trigger frame, is transmitted from an AP to a STA. When that value is 0, it may mean an unannounced TWT.

A TWT flow identifier subfield may include a 3-bit value which uniquely identifies specific information on a corresponding TWT request in other request performed between the same TWT requesting STA and TWT responding STA pair.

A TWT wake interval exponent subfield may configure a TWT wake interval value in a binary microsecond unit. For an individual TWT, it may mean an interval between individual TWT SPs. A TWT wake interval of a requesting STA may be defined as [TWT Wake Interval Mantissa * 2 * TWT Wake Interval Exponent].

A TWT protection subfield may represent whether to use a TWT protection mechanism. When that value is 1, a TXOP in a TWT SP may be started with a NAV protection mechanism such as a (MU)RTS/CTS or a CTS-to-self frame and when that value is 0, a NAV protection mechanism may not be applied.

In reference to FIG. 12, some of subfields of a request type subfield of a broadcast TWT parameter set field are common with subfields of a request type subfield of an individual TWT parameter set field, so a description thereof is omitted. Subfields included only in a broadcast TWT parameter set are described below.

A last broadcast parameter set subfield represents whether it is a last broadcast TWT parameter set. When that value is 1, it may represent that it is a last broadcast TWT parameter set and when that value is 0, it may represent that a next broadcast TWT parameter set exists.

A broadcast TWT recommendation subfield may represent recommendations for a frame type transmitted by an AP during a broadcast TWT SP as a value of 1-7.

For example, when the broadcast TWT recommendation subfield value is set to 4, the corresponding broadcast TWT SP may be referred to as an r-TWT SP. That is, the broadcast TWT parameter set in which the broadcast TWT recommendation subfield value is set to 4 may be referred to as a restricted TWT parameter set. At this time, during the r-TWT SP, the AP and the member r-TWT scheduled STAs may assign the transmission priority of the QoS data frame, which is delay-sensitive traffic. And, a broadcast TWT element including only the r-TWT parameter set field may be referred to as a restricted TWT element.

A last 1 bit of a request type subfield of a broadcast TWT parameter set field may be reserved.

As an example of the present disclosure, the broadcast TWT parameter set field may include a restricted TWT traffic information (info) subfield. As an example, the TWT traffic information subfield may follow the broadcast TWT info field of the broadcast TWT parameter set field illustrated in FIG. 12.

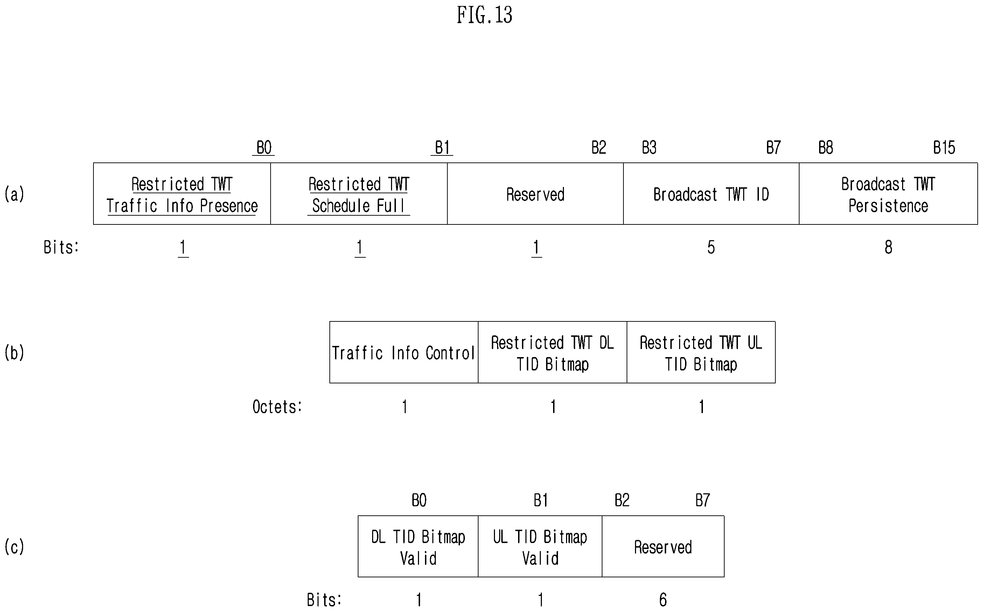

As an example of the present disclosure, as illustrated in (a) of FIG. 13, the broadcast TWT information subfield may include a restricted TWT traffic information present subfield and a restricted TWT schedule full subfield.

The TWT Traffic Information Existence subfield and the restricted TWT Schedule Full subfield may be configured in the first bit (B0) and the second bit (B1) of the broadcast TWT information field as illustrated in FIG. 12, respectively.

For example, if the restricted TWT traffic information field is present on the broadcast TWT parameter set field, the restricted TWT traffic information presence subfield value of the restricted TWT parameter set field may be set to 1. Otherwise, the restricted TWT traffic information presence subfield value may be set to 0. For non-EHT STAs, the restricted TWT traffic information presence subfield may be reserved.

If the Restricted TWT Schedule Full subfield value is set to 1, it may indicate that the r-TWT scheduling AP is unlikely to accept a request from a STA of the BSS to establish a new membership in that schedule. Otherwise, the Restricted TWT Schedule Full subfield value may be set to 0.

The Restricted TWT Schedule Full subfield may be valid if the Restricted TWT Parameter Set field is carried in a TWT element with the Negotiation Type subfield set to 2 and the TWT element is transmitted by the EHT AP.

If the Restricted TWT Traffic Information Presence subfield value of the Broadcast TWT Information subfield is set to 1, the Restricted TWT Traffic Information field may be present in the Restricted TWT Parameter Set field.

As illustrated in (b) of FIG. 13, the restricted TWT traffic information field may include a traffic information control subfield, a restricted TWT DL TID bitmap subfield, and a restricted TWT UL TID bitmap subfield.

As illustrated in (c) of FIG. 13, the traffic information control field may include a DL TID bitmap valid subfield and a UL TID bitmap valid subfield.

The DL TID Bitmap Valid subfield may be set to 1 to indicate that the restricted TWT DL TID bitmap field is valid. The DL TID Bitmap Valid subfield may be set to 0 to indicate that DL traffic of all TIDs mapped to the DL for a link for which r-TWT membership is established is identified as delay sensitive traffic and the restricted TWT DL TID bitmap field is reserved.

The UL TID Bitmap Valid subfield may be set to 1 to indicate that the restricted TWT UL TID bitmap field is valid.

The UL TID Bitmap Valid subfield may be set to 0 to indicate that UL traffic of all TIDs mapped to the UL for a link for which r-TWT membership is established is identified as delay sensitive traffic and the restricted TWT UL TID bitmap field is reserved.

The Restricted TWT DL TID Bitmap and Restricted TWT UL TID Bitmap subfields may assign TIDs identified as delay sensitive traffic streams in DL and UL directions, respectively, by an r-TWT scheduling AP or an R-TWT scheduling STA.

A value of 1 at bit position k of the bitmap may indicate that TID k is classified as a delay-sensitive traffic stream. A value of 0 at bit position k of the bitmap may indicate that TID k is not classified as a delay-sensitive traffic stream.

### Stream classification service (SCS) and QoS characteristic

Stream Classification Service (SCS) is a service that an AP may provide to associated STAs that support SCS. In SCS, an AP may classify individually addressed received MSDUs based on parameters provided by non-AP STAs.

The classification allows selection of user priority (UP), drop eligibility, and EDCA transmit queue for all MSDUs matching the classification. That is, individually addressed MSDUs matching the classification may be assigned to an access category (AC), and individually addressed MSDUs may be tagged with a drop eligibility tag.

When intra-AC prioritization is enabled, SCS allows for more granular prioritization by assigning MSDUs that match a classification to a primary or alternate EDCA transmission queue.

In relation to SCS, for classification of MSDU and mapping/assignment between MSDU and AC, transmission and reception of SCS request frames and SCS response frames may be performed between non-AP STA and AP.

Additionally, a QoS characteristics element contains a set of parameters defining the characteristics of a traffic flow and QoS expectations. In the context of a particular non-AP EHT STA, the QoS characteristics element may be used by the EHT AP and the non-AP EHT STA to support QoS traffic transmission using SCS related procedures and/or restricted TWT (r-TWT) procedures.

In relation to the aforementioned SCS, the following may be considered for the EHT variant.

The SCS procedure is used to classify individually addressed MSDUs received based on parameters provided by the non-AP MLD, or to request the AP MLD to describe the traffic characteristics to the AP MLD.

When the Request Type field of the SCS Request frame is set to "addition" or "modification", a non-AP EHT STA may transmit an SCS Request frame with an SCS Descriptor element containing a QoS Characteristics element. The QoS Characteristics element describes the traffic characteristics of the requested SCS stream. A non-AP EHT STA shall not transmit an SCS Request frame with an SCS Descriptor element containing a QoS Characteristics element to an AP that has not received an EHT Function element with an SCS Traffic Description Support field set to 1.

The QoS characteristic element may be a criterion for scheduling of the EHT AP. The EHT AP shall schedule DL frame transmission such that the requested delay bound and minimum data rate for DL data frames are met when the direction subfield of the QoS characteristic element indicates DL. The EHT AP shall enable UL frame transmission from an EHT STA in an interval between the requested minimum service interval and the maximum service interval, and the AP shall meet the requested minimum data rate when the direction subfield of the QoS characteristic element indicates UL. The EHT AP shall enable direct link frames to be transmitted from an EHT STA to another STA over a link specified in the LinkID subfield of the control information field in an interval between the requested minimum service interval and the maximum service interval.

If an EHT STA is a TWT scheduled STA or a TWT requesting STA and there is a negotiated TWT SP for the TID assigned in the QoS characteristic element with the EHT AP, the EHT AP shall ensure that the service interval matches the negotiated TWT wake interval.

If an EHT STA is an R-TWT scheduled STA and there is a negotiated R-TWT SP for the TID assigned in the QoS characteristic element, the EHT AP shall provide the traffic corresponding to the direction and TID specified in the QoS characteristic element using the corresponding R-TWT SP. If the negotiated R-TWT SP for the TID assigned in the QoS characteristic element is a trigger-supporting R-TWT, the EHT AP shall ensure that a trigger frame is reserved when the R-TWT SP starts.

An EHT AP may drop a DL data frame if the lifetime of the frame exceeds the value specified in the MSDU Lifetime field. In this regard, the QoS characteristic element provided by a non-AP EHT STA is used by the receiving EHT AP to facilitate scheduling for contention-based channel access (EDCA) or MU operation.

### Method for Prioritizing Transmission and Reception of Latency-Sensitive Traffic

The present disclosure proposes a low latency priority transmission/reception method to support traffic sensitive to time delay (hereinafter referred to as latency sensitive traffic).

With the recent surge in wired/wireless traffic, latency-sensitive traffic has increased significantly. With the increase in real-time audio/video transmission and the proliferation of multimedia devices, the need to support latency-sensitive traffic in wireless environments has also increased.

However, since the transmission speed in a wireless environment is lower than that in a wired environment and there are also interference issues from the surroundings, there may be many things to consider in order to support latency-sensitive traffic. For example, considering that a wireless LAN system is a communication system that shall compete equally in the industrial scientific medical (ISM) band without channel monopolization by a central base station, it may be relatively more difficult to support latency-sensitive traffic in a wireless LAN system.

Hereinafter, the present disclosure describes a method for supporting preferential transmission of latency-sensitive traffic by taking into consideration the aforementioned points through specific examples.

### Embodiment 1

This embodiment relates to a method for identifying latency-sensitive traffic based on a traffic identifier (TID).

For wireless LAN systems, the TID field is configured/defined with 4 bits, and a value from value 0 to value 15 may be defined according to the 4 bits.

In this regard, for the existing wireless LAN system, values 0 to 7 for TID are defined to be used in enhanced distributed channel access (EDCA), and values 8 to 15 are defined to be used for hybrid coordination function control channel access (HCCA), Service Period Channel Access (HPCA), HCCA-EDCA mixed mode (HEMM), and SEMM.

Considering these points, the proposed method of the present disclosure assumes the use of a TID of value 8 to value 15 as an identifier for identifying latency-sensitive traffic (i.e., low-latency traffic).

For example, using TID values of value 8 to value 12, latency-sensitive traffic (i.e., latency-sensitive data) may be distinguished/identified differently from data of other currently defined access categories (ACs) based on one or a combination of one or more of the following criteria (hereinafter, criteria 1 to criteria 5).

### - Criteria 1. Separate latency-sensitive data/traffic by data/traffic type

For example, data/traffic types may be distinguished as real-time gaming, cloud gaming, robotics_equipment control, robotics_human safety, robotics_haptic technology, robotics_drone, etc.
- Criteria 2. Classified by the rate at which the latency-sensitive traffic shall be successfully transmitted and received during the allocated time.

For example, the percentages may be 95%, 96%, 97%, 98%, 99%, 99.9%, 99.99%, 99.999%, 99.9999%, etc.
- Criteria 3. Distinguished by the value of the minimum transmission failure rate of the corresponding latency-sensitive traffic during the time to be allocated.

For example, the minimum failure rate may be 0.0001%, 0.001%, 0.01%, 0.1%, 1%, 2%, 3%, 4%, 5%, etc.
- Criteria 4. Distinguished by the minimum jitter variance value (/ms) required for successful transmission and reception of the latency-sensitive traffic.

For example, the distinction according to the minimum jitter variance may be: less than 2ms, less than 1ms, less than 0.5ms, less than 0.2ms, less than 0.1ms, etc.
- Criteria 5. Distinguished by the minimum intra-BSS latency value (/ms) required for successful transmission and reception of the latency-sensitive traffic.

For example, the distinction based on the delay value within the minimum BSS may be: less than 10ms, less than 5ms, less than 3ms, less than 1ms, etc.

The above-described criteria may be set/defined based on field values within QoS characteristic elements defined in the baseline (e.g., QoS characteristic elements described above in the present disclosure).

Based on this, a method of identifying latency-sensitive traffic may be used based on at least one or more of the criteria described above. For example, if the TID of the transmitted and received traffic is 8, the rate at which the traffic shall be successfully transmitted and received during the allocated time is 99.9%, and the value of the minimum transmission failure rate of the traffic during the allocated time is 0.1%, then the traffic may be classified as latency-sensitive traffic, unlike data of other AC(s) defined previously.

Additionally, the present disclosure proposes a method in which, when the TID of latency-sensitive traffic is indicated with a value of 8 to 15, the traffic(s) is classified into a new queue. For clarity of explanation, the queue defined for latency-sensitive traffic is referred to as Queue low latency (LL) in the present disclosure.

FIG. 14 illustrates a Queue LL and a conventional Queue-based structure according to an embodiment of the present disclosure.

Referring to FIG. 14, MSDU (MAC service data unit) may be classified/assigned/stored in a queue based on user priority (UP), etc.

For example, the Queue structure proposed in the present disclosure may include not only existing Queues, such as Queue VO, Queue A_VO, Queue VI, Queue A_VI, Queue BE, Queue BK, etc., but also a newly defined Queue LL.

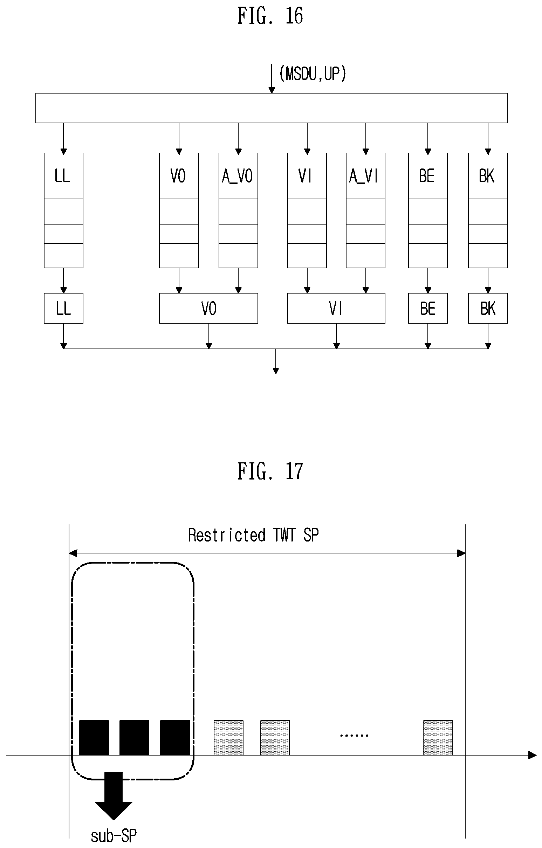

In this regard, latency-sensitive traffic(s) classified in Queue LL may be mapped to AC based on one or more of the methods described in FIG. 15 and FIG. 16.

FIG. 15 illustrates an example of mapping between latency-sensitive traffic and AC according to an embodiment of the present disclosure.

Referring to FIG. 15, the latency-sensitive traffic(s) classified in Queue LL may be mapped to four types of AC defined in the existing baseline, namely AC_VO (voice), AC_VI (video), AC_BE (best effort), and AC_BK (background). In this regard, data stored in Queue LL may be mapped to an ACK waiting for transmission and transmitted.

For example, if STA plans to transmit data of AC_BE, data stored in Queue LL may be mapped to AC_BE and transmitted. Additionally, if STA plans to transmit data of AC_VO, data stored in Queue LL may be mapped to AC_VO and transmitted.

FIG. 16 illustrates another example of mapping between latency-sensitive traffic and AC according to an embodiment of the present disclosure.

Referring to Fig. 16, in addition to the four types of AC (i.e., AC_VO, AC_VI, AC_BE, AC_BK) defined in the existing baseline, an AC for low latency (LL) (hereinafter referred to as AC_LL) may be newly defined. In this case, latency-sensitive traffic(s) classified in Queue LL may be mapped to AC_LL and transmitted.

Here, AC_LL corresponding to the newly defined AC may have a higher priority than the conventional AC_VO (or primary AO). That is, AC_LL may be defined to have the highest user priority among the defined AC types.

### Embodiment 2

This embodiment is about a method of indicating that the data is stored in Queue LL as described in the aforementioned embodiment 1, and configuring/indicating a separate time interval for transmission and reception of the data. Here, the data stored in Queue LL may mean data classified as latency-sensitive traffic.

That is, in this embodiment, a method for separately allocating time for an AP to transmit only data stored in Queue LL to an STA is specifically described.

Here, the time allocated separately for latency-sensitive traffic may correspond to a specific time period (hereinafter referred to as a sub-SP) within the entire scheduled period (SP) allocated by the AP to the STA. For example, the sub-SP may mean an initial certain time period in the entire SP.

The AP may assign the corresponding sub-SP to the STA for transmission and reception of data stored in the Queue LL.

If there is time remaining after the STA transmits all data stored in Queue LL during the sub-SP, the STA may be configured to sequentially transmit data(s) stored in other Queues other than Queue LL.

Additionally or alternatively, if the STA wants to continue transmitting or receiving data stored in the Queue LL even after the sub-SP, the AP may determine/configure/indicate whether to additionally transmit the data beyond or by extending the sub-SP.

Additionally or alternatively, if there is no data to be transmitted during the corresponding sub-SP, i.e., no data stored in Queue LL, the STA may ignore the corresponding sub-SP and transmit and receive data.

FIG. 17 illustrates a sub-SP for transmitting and receiving data stored in Queue LL according to an embodiment of the present disclosure.

Referring to FIG. 17, a time period, i.e., the aforementioned sub-SP, may be allocated in which only data stored in the Queue LL may be transmitted and received for a certain period of time from the start time within a restricted TWT (r-TWT) SP.

For example, the STA may transmit and receive data classified as first latency-sensitive traffic within the assigned sub-SP, and then transmit and receive data classified as second latency-sensitive traffic within the r-TWT SP after the sub-SP. At this time, the second latency-sensitive traffic may include the first latency-sensitive traffic.

In this regard, data classified as first latency-sensitive traffic may mean data stored in the Queue LL described above in the present disclosure. Data classified as second latency-sensitive traffic may mean data classified as being transmittable and receivable in the r-TWT SP set to the STA.

With respect to the proposed method in the present disclosure, the signaling indicating that the STA has data stored in the Queue LL may be based on at least one of the examples described below.

For example, a new field/element may be defined to indicate that the data is stored in Queue LL. As a detailed example, a new (sub-)field may be defined within one of the fields/elements within a conventional defined frame, such as stream classification service (SCS) or traffic specification (TSPEC), and the new (sub-)field may indicate that the corresponding traffic is traffic stored in Queue LL. Alternatively, a new field may be defined in a new frame, not in a conventional defined frame, to indicate that the corresponding traffic is traffic stored in Queue LL.

For example, if a new field indicating that the data is stored in Queue LL is composed of 1 bit, a value of 1 may indicate that the corresponding traffic is traffic stored in Queue LL, and a value of 0 may indicate that the corresponding traffic is traffic not stored in Queue LL. Regarding the specific bit configuration, the opposite case may also be possible.

For example, the value of the new field may be indicated as having a value between TID 8 and 15, indicating that traffic with that TID is stored in Queue LL.

In this regard, a new field indicating information for the amount of data stored in the Queue LL may also be included.

With respect to the proposed method in the present disclosure, signaling for transmitting and receiving information for a sub-SP allocated for transmission of only data stored in Queue LL within an SP (e.g., TXOP) allocated by an AP to a STA may be based on at least one of the examples described below.

For example, an AP may announce/communicate information for how long a sub-SP will be from the start time within a TWT SP allocated by the AP, via a new field within the pre-defined individual/broadcast/restricted TWT elements.

For example, the AP may announce/communicate information for how long it will be a sub-SP from the start of the allocated data transmission/reception time through the new element.

In this regard, information for the sub-SP may include information for whether the sub-SP is one-time or periodic and/or information for the duration of the sub-SP. Here, the information for whether the sub-SP is one-time or periodic may mean information for whether it is applied only to the SP that starts earliest in time among the SPs allocated to the STA, or whether it is applied to all SPs allocated to the STA. With respect to the information for the duration of the sub-SP, the duration value shall be smaller than the SP (e.g., TXOP) to which the STA is allocated, and may not be set to be large.

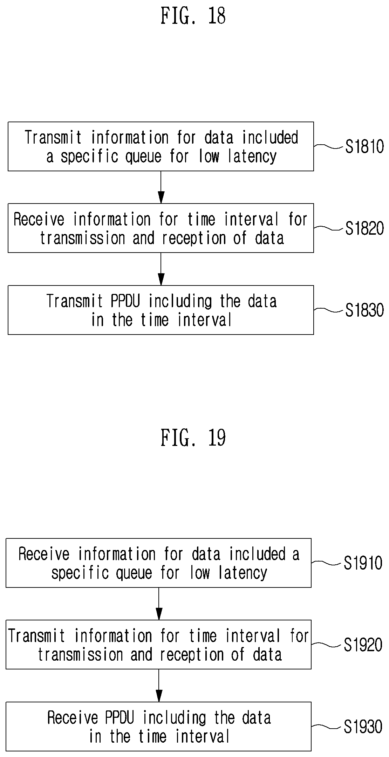

Hereinafter, the operation of the STA according to the embodiment of the present disclosure described above will be described with reference to FIGS. 18 and 19.

That is, the examples of FIGS. 18 and 19 may correspond to some of the various examples of the present disclosure. For example, in FIGS. 18 and 19, the first STA may correspond to a non-AP STA, and the second STA may correspond to an AP.

FIG. 18 illustrates an operation flow chart by a first STA according to an embodiment of the present disclosure.

The first STA may transmit information for data included in a specific queue for low latency to the second STA (S1810).

For example, the specific queue corresponds to Queue LL described above in the present disclosure, and the data may be transmitted in data according to latency-sensitive traffic.

In this regard, the data may be transmitted in traffic assigned as one of the candidate traffic identifier (candidate TID) values predefined for low latency.

For example, the candidate TID values may correspond to values 8 to 15 among the 4-bit defined TID values.

In this regard, data included in a specific queue may be transmitted by being mapped to at least one of four types of access categories (AC). Here, the four types of AC may include AC_VO (voice), AC_VI (video), AC_BE (best effort), and AC_BK (background).

Additionally or alternatively, data contained in a particular queue may be mapped to a low-latency associated AC and transmitted, wherein the low-latency associated AC may be defined to have the highest priority among a plurality of predefined ACs.

The first STA may receive information for a time period for transmitting and receiving data from the second STA (S1820).

In this regard, the time interval falls within a scheduled period for the first STA, and a start time of the time interval may be set to be the same as a start time of the scheduled period for the first STA. For example, if the scheduled period for the first STA corresponds to a target wake time service period (TWT SP) (e.g., individual/broadcast/restricted TWT SP), information for the time interval may be received via a TWT element associated with the TWT SP.

Additionally or alternatively, the information for the time interval may include at least one of information for whether the time interval is one-time or periodic or information for the duration of the time interval.

The first STA may transmit a PPDU including the corresponding data to the second STA during the corresponding time period (S1830).

Additionally or alternatively, information about data included in a specific queue in S1810 may be transmitted via a stream classification service (SCS) related frame or a traffic specification (TSPEC) related frame.

Additionally or alternatively, information for data included in a specific queue in S1810 may be configured as 1 bit. For example, a value 1 of the 1 bit may be defined to indicate that the corresponding data is transmitted in traffic included in the specific queue, and a value 0 may be defined to indicate that the corresponding data is transmitted in traffic not included in the specific queue.

Additionally or alternatively, information for data contained in a particular queue in S1810 may indicate one of the aforementioned candidate TID values.

Additionally or alternatively, information for the amount of data included in a particular queue may be transmitted along with information for the data included in a particular queue in S1810.

Additionally or alternatively, the traffic associated with the aforementioned low latency may be classified based on one or more field values within a quality of service (QoS) characteristic element. For example, the one or more field values within the QoS characteristic element may include one or more of a traffic type, a successful transmission/reception ratio, a minimum transmission failure ratio, a minimum jitter variance value required for successful transmission/reception, or a minimum intra-BSS latency value required for successful transmission/reception.

The method performed by the first STA described in the example of FIG. 18 may be performed by the first device

(100) of FIG. 1. For example, one or more processors (102) of the first device (100) of FIG. 1 may be configured to transmit information for data included in a specific queue for low delay to the second STA (200) through one or more transceivers (106), receive information for a time interval for transmitting and receiving data from the second STA (200), and transmit a PPDU including the data to the second STA (200) during the time interval.

For example, one or more processors (102) of the first device (100) may be configured to classify specific traffic into a new queue for latency-sensitive traffic (i.e., a specific queue for low-latency) based on transmission requirements of specific traffic using values of TID 8 to 15 before configuring a PPDU. Based on this, one or more processors (102) of the first device

(100) may be configured to perform an operation of transmitting and receiving a PPDU including traffics belonging to the corresponding queue through one or more transceivers (106) during a time period (e.g., a sub-SP) in which latency-sensitive traffic may be transmitted and received with priority.

Furthermore, one or more memories (104) of the first device (100) may store instructions for performing the method described in the example of FIG. 18 or the examples described above when executed by one or more processors (102).

FIG. 19 illustrates an operation flow chart by a second STA according to an embodiment of the present disclosure.

The second STA may receive information for data included in a specific queue for low latency from the first STA (S1910).

For example, the specific queue corresponds to Queue LL described above in the present disclosure, and the data may be transmitted in data according to latency-sensitive traffic.

In this regard, the data may be transmitted in traffic assigned as one of the candidate traffic identifier (candidate TID) values predefined for low latency.

For example, the candidate TID values may correspond to values 8 to 15 among the 4-bit defined TID values.

The second STA can transmit information for the time interval for transmitting and receiving data to the first STA (S1920).

The second STA may receive a PPDU including the corresponding data from the first STA during the corresponding time period (S1930).

In the example of Fig. 19, specific descriptions of information for data included in a specific queue, information for a time interval for transmitting and receiving the data, candidate TID values, low-latency related traffic, etc. are the same as those described in the example of Fig. 18, so redundant descriptions are omitted.

The method performed by the second STA described in the example of FIG. 13 may be performed by the second device (200) of FIG. 1. For example, one or more processors (202) of the second device (200) of FIG. 1 may be configured to receive information for data included in a specific queue for low latency from the first STA (100), transmit information for a time interval for transmitting and receiving data to the first STA (100), and receive a PPDU including the data from the first STA (100) in the time interval.

For example, one or more processors (202) of the second device (200) may be configured to recognize which traffics are classified as latency-sensitive traffic based on information previously shared with the first STA (100) for data acquired by decoding the PPDU. Based on this, one or more processors (202) of the second device (200) may be configured to recognize traffic transmitted and received in a time interval (e.g., sub-SP) allocated for transmission and reception of latency-sensitive traffic as latency-sensitive traffic.

Furthermore, one or more memories (204) of the second device (200) may store instructions for performing the method described in the example of FIG. 19 or the examples described above when executed by one or more processors (202).

In the conventional wireless LAN system, the content of configuring/indicating a time interval for transmitting and receiving low-latency traffic such as restricted TWT SP is defined. In this regard, the proposed method in the present disclosure is about a method of configuring/defining high-priority low-latency traffic, i.e., latency-sensitive traffic, and transmitting and receiving the corresponding traffic with high priority. In particular, the proposed method in the present disclosure is about a new queue definition related to the classification of the corresponding traffic and a specific mapping relationship between the corresponding traffic and AC, and a method of setting/indicating a specific time interval for transmitting and receiving the corresponding traffic. According to the proposed method in the present disclosure, a new effect of being able to transmit and receive latency-sensitive traffic with high priority may be achieved, which is different from data stored in a convnetional queue.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless LAN system, the method comprising:
transmitting information for data included in a specific queue for low latency to a second STA;
receiving information for a time interval for transmission and reception of the data from the second STA; and
transmitting a physical layer protocol data unit (PPDU) including the data to the second STA in the time interval,
wherein the data is transmitted in traffic assigned as one of candidate traffic identifier (candidate TID) values predefined for low latency.

2. The method of claim 1,
wherein the candidate TID values are corresponding to values 8 to 15 among TID values defined as 4 bits.

3. The method of claim 1,
wherein the data included in the specific queue is transmitted by being mapped to at least one of four types of access categories (AC), and
wherein the four types of AC include AC_VO (voice), AC_VI (video), AC_BE (best effort), and AC_BK (background).

4. The method of claim 1,
wherein the data included in the specific queue is mapped to a low-latency related AC and transmitted, and
wherein the low-latency related AC has a highest priority among a plurality of predefined ACs.

5. The method of claim 1,
wherein the time interval belongs to within a scheduled period for the first STA, and
wherein a start time of the time interval is set to be identical to a start time of the scheduled period.

6. The method of claim 5,
wherein, based on the scheduled interval corresponding to a target wake time service period (TWT SP), information for the time interval is received through a TWT element related to the TWT SP,.

7. The method of claim 1,
wherein the information for the time interval includes at least one of information for whether the time interval is one-time or periodic or information for a duration of the time interval.

8. The method of claim 1,
wherein the information for data included in the specific queue is transmitted through a stream classification service (SCS) related frame or a traffic specification (TSPEC) related frame.

9. The method of claim 1,
wherein the information for data included in the specific queue is constructed with 1 bit, and
wherein a value 1 of the 1 bit is defined to indicate that the data is transmitted in traffic included in the specific queue, and
wherein a value 0 of the 1 bit is defined to indicate that the data is transmitted in traffic not included in the specific queue.

10. The method of claim 1,
wherein the information data included in the specific queue indicates one of the candidate TID values.

11. The method of claim 1,
wherein information for the amount of data included in the specific queue is transmitted along with the information for data included in the specific queue.

12. The method of claim 1,
wherein a traffic related to the low-latency is classified based on one or more field values within a quality of service (QoS) characteristic element.

13. The method of claim 12,
wherein the one or more field values within the QoS characteristic element include one or more of a traffic type, a successful transmission/reception ratio, a minimum transmission failure ratio, a minimum jitter variance value required for successful transmission/reception, or a minimum intra-BSS latency value required for successful transmission/reception.

14. An apparatus for a first station (STA) in a wireless local area network (WLAN) system, the apparatus comprising:
at least one transceiver; and
at least one processor connected to the at least one transceiver,
wherein the at least one processor is configured to:
transmit information for data included in a specific queue for low latency to a second STA;
receive information for a time interval for transmission and reception of the data from the second STA; and
transmit a physical layer protocol data unit (PPDU) including the data to the second STA in the time interval,
wherein the data is transmitted in traffic assigned as one of candidate traffic identifier (candidate TID) values predefined for low latency.

15. A method performed by a second station (STA) in a wireless LAN system, the method comprising:
receiving information for data included in a specific queue for low latency from a first STA;
transmitting information for a time interval for transmission and reception of the data to the first STA; and
receiving a physical layer protocol data unit (PPDU) including the data from the first STA in the time interval,
wherein the data is transmitted in traffic assigned as one of candidate traffic identifier (candidate TID) values predefined for low latency.

16. An apparatus for a second station (STA) in a wireless local area network (WLAN) system, the apparatus comprising:
at least one transceiver; and
at least one processor connected to the at least one transceiver,
wherein the at least one processor is configured to:
receive information for data included in a specific queue for low latency from a first STA;
transmit information for a time interval for transmission and reception of the data to the first STA; and
receive a physical layer protocol data unit (PPDU) including the data from the first STA in the time interval,
wherein the data is transmitted in traffic assigned as one of candidate traffic identifier (candidate TID) values predefined for low latency.

17. A processing unit configured to control a station (STA) in a wireless local area network (WLAN) system, the processing unit comprising:
at least one processor; and
at least one computer memory operably connected to the at least one processor, and based on being executed by the at least one processor, storing instructions for performing a method according to any one claim of claims 1 to 13.

18. At least one non-transitory computer-readable medium storing at least one instruction, wherein:
the at least one instruction controls a device to perform a method according to any one claim of claims 1 to 13 in a wireless local area network (WLAN) system by being executed by at least one processor.
